# EUROPEAN PATENT APPLICATION

(11) **EP 4 428 629 A1**
(43) Date of publication of application: **11.09.2024**
(21) Application number: 24161117.7
(22) Date of filing: 04.03.2024
(51) Int. Cl.: G04B 19/10, G04B 19/12, G04B 45/00, B44C 1/22

(54) **WATCH COMPONENT, WATCH, AND METHOD FOR MANUFACTURING WATCH COMPONENT**

(30) Priority: 06.03.2023 JP 2023033632
(71) Applicant: Seiko Epson Corporation, Tokyo 160-8801 (JP)
(72) Inventor: TAKISHITA, Yuki, Suwa-shi, 392-8502 (JP); YOSHINAGA, Ai, Suwa-shi, 392-8502 (JP)
(74) Representative: Lewis Silkin LLP

(57) **Abstract**

A watch component includes a substrate having a surface on which a plurality of recesses are formed, wherein in a cross-sectional view obtained by cutting the substrate in a thickness direction, a depth of the recesses along the thickness direction is 55 µm or less, and a pitch which is a length between bottom portions of adjacent ones of the recesses is 65 µm or more.

## Description

### BACKGROUND

### 1. Technical Field

The present disclosure relates to a watch component, a watch, and a method for manufacturing the watch component.

### 2. Related Art

JP-A-2022-11407 discloses a watch dial in which a plurality of grooves are formed through laser processing on a substrate. In the watch dial of JP-A-2022-11407, the plurality of grooves with different depths are formed through the laser processing, so that variety of brightness can be expressed, and the decorative and design properties can be enhanced.

According to JP-A-2022-11407, the irradiated light is reflected a plurality of times in the groove. Thus, the light is absorbed by the side surface of the groove. This enables reduction of the brightness of the portion where the groove is formed with respect to the portion where the groove is not formed. However, there has been a problem in that the brightness of the portion where the groove is not formed cannot be increased.

### SUMMARY

A watch component according to the present disclosure includes a substrate having a surface on which a plurality of recesses are formed, wherein in a cross-sectional view obtained by cutting the substrate in a thickness direction, a depth of the recesses along the thickness direction is 55 µm or less, and a pitch which is a length between bottom portions of adjacent ones of the recesses is 65 µm or more.

A watch component according to the present disclosure includes a substrate having a surface on which a plurality of recesses are formed, wherein in a cross-sectional view obtained by cutting the substrate in a thickness direction, a tangent at a center point of a side surface of each of the recesses is inclined by 70° or less with respect to a direction orthogonal to the thickness direction, and a pitch which is a length between bottom portions of adjacent ones of the recesses is 65 µm or more.

A watch component according to the present disclosure includes a substrate having a surface on which a plurality of recesses are formed, wherein in a cross-sectional view obtained by cutting the substrate in a thickness direction, a tangent at a center point of a side surface of each of the recesses is inclined by 40° or less with respect to a direction orthogonal to the thickness direction, and a depth of the recesses along the thickness direction is 55 µm or less.

A watch of the present disclosure includes the watch component described above.

A method for manufacturing a watch component according to the present disclosure is a method for manufacturing a watch component including a substrate, the method including forming a plurality of recesses on a surface of the substrate, wherein in a cross-sectional view obtained by cutting the substrate in a thickness direction, a depth of the recesses along the thickness direction is 55 µm or less, and a pitch which is a length between bottom portions of adjacent ones of the recesses is 65 µm or more.

A method for manufacturing a watch component according to the present disclosure is a method for manufacturing a watch component including a substrate, the method including forming a plurality of recesses on a surface of the substrate, wherein in a cross-sectional view obtained by cutting the substrate in a thickness direction, a tangent at a center point of a side surface of each of the recesses is inclined by 70° or less with respect to a direction orthogonal to the thickness direction, and a pitch which is a length between bottom portions of adjacent ones of the recesses is 65 µm or more.

A method for manufacturing a watch component according to the present disclosure is a method for manufacturing a watch component including a substrate, the method including forming a plurality of recesses on a surface of the substrate, wherein in a cross-sectional view obtained by cutting the substrate in a thickness direction, a tangent at a center point of a side surface of each of the recesses is inclined by 40° or less with respect to a direction orthogonal to the thickness direction, and a depth of the recesses along the thickness direction is 55 µm or less.

### BRIEF DESCRIPTION OF THE DRAWINGS

FIG. 1 is a front view illustrating a watch of a first embodiment.
FIG. 2 is a cross-sectional view illustrating a dial main part of a first embodiment.
FIG. 3 is an enlarged perspective view illustrating a main part of the dial of the first embodiment.
FIG. 4 is a schematic view illustrating a method for measuring an average value of brightness L*.
FIG. 5 is a diagram illustrating a relationship among the average value of the brightness L*, a depth D, and a pitch P.
FIG. 6 is a cross-sectional view illustrating a dial main part of a second embodiment.

### DESCRIPTION OF EMBODIMENTS

### First Embodiment

A watch 1 according to an embodiment of the present disclosure will be described below with reference to the drawings.

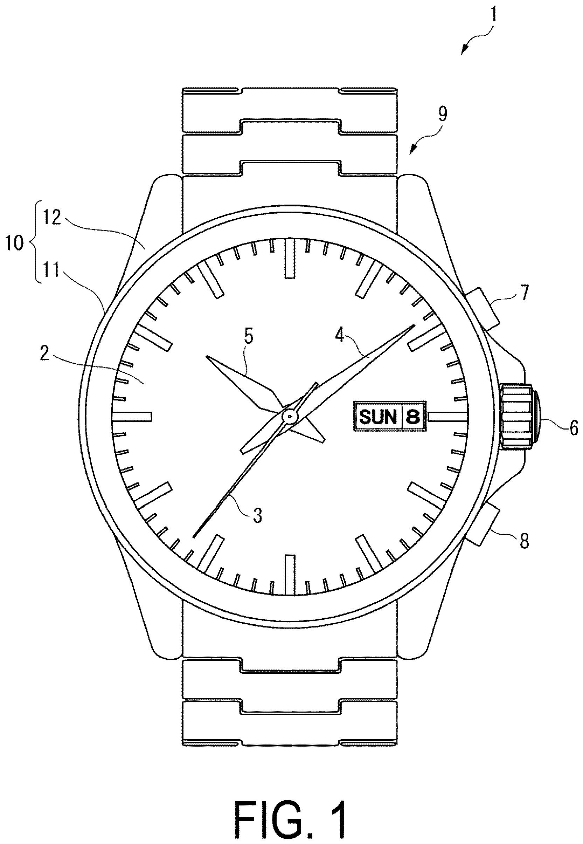

FIG. 1 is a front view illustrating the watch 1. In this embodiment, the watch 1 is configured as a wristwatch worn on a user's wrist.

As illustrated in FIG. 1, the watch 1 includes a case 10 made of a metal. Inside the case 10, the watch 1 includes a disc-shaped dial 2, a seconds hand 3, a minute hand 4, an hour hand 5, a crown 6, an A-button 7, and a B-button 8. A band 9 is attached to the case 10.

The case 10 also includes a case body 11 and bows 12. The case body 11 houses therein the dial 2, the seconds hand 3, the minute hand 4, the hour hand 5, and the like described above. The bows 12 are provided at the 6 and 12 o'clock positions of the case body 11. A band 9 is attached to each of the bows 12 with a spring bar not illustrated in the drawing, or the like.

Note that the dial 2 is an example of the watch component of the present disclosure.

### Dial

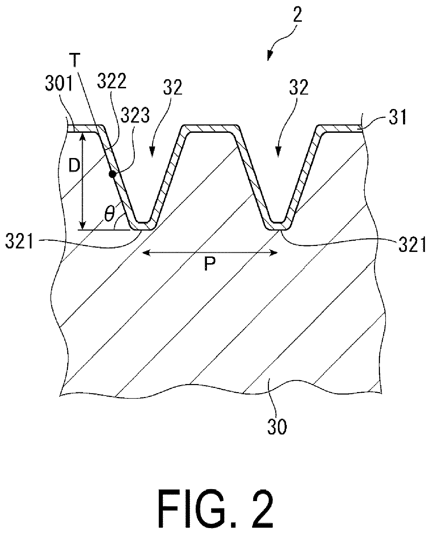

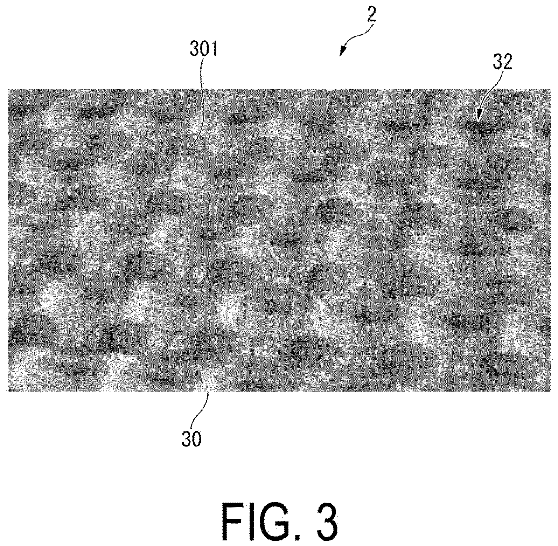

FIG. 2 is a cross-sectional view illustrating a main part of the dial 2, and FIG. 3 is an enlarged cross-sectional view illustrating the main part of the dial 2. Note that FIG. 2 is a perspective view obtained by cutting a substrate 30 in the dial 2 in the thickness direction.

As illustrated in FIGS. 2 and 3, the dial 2 includes the substrate 30 and a multilayer film 31. In this embodiment, the substrate 30 is entirely covered with the multilayer film 31. That is, the multilayer film 31 is stacked covering the entirety of a surface 301 of the substrate 30.

Note that the dial 2 is not limited to the above-mentioned configuration, and the multilayer film 31 may be stacked covering a part of the surface 301 of the substrate 30, for example.

### Substrate

A material of the substrate 30 is composed of metal such as iron, brass, and aluminum, resin, or the like. Note that when the substrate 30 is composed of resin, the resin may be a non-light transmissive resin that does not transmit light, or a light transmissive resin that transmits light.

In this embodiment, a plurality of recesses 32 is formed in the surface 301 of the substrate 30 in the dial 2.

### Recess

In this embodiment, the plurality of recesses 32 is formed in the surface 301 of the substrate 30. Specifically, the recesses 32 are formed such that a plurality of cone-shaped protrusions is formed at the surface 301 as illustrated in FIG. 3.

In this embodiment, the depth of each of the recesses 32 along the thickness direction of the substrate 30 is defined as D, and a length between bottom portions 321 of adjacent ones of the adjacent recesses 32 is defined as a pitch P. Inclination θ of a tangent T at a middle point 323 of a side surface 322 of each of the recesses 32 with respect to a direction orthogonal to the thickness direction.

Under this condition, in this embodiment, the recesses 32 are formed such that the depth D is 55 µm or less, the pitch P is 65 µm or more, or the inclination θ is 70° or less, the pitch P is 65 µm or more, or the inclination θ is 40° or less, and the depth D is 55 µm or less. More preferably, the recesses 32 are formed such that the depth D is 40 µm or less, the pitch P is 75 µm or more, and the inclination θ is 40° or less.

### Multilayer Film

The multilayer film 31 is stacked on the substrate 30 on the surface 301 side thereof. In this embodiment, the multilayer film 31 includes a color absorbing film and a color adjusting film.

The color absorbing film is stacked on the substrate 30 on the surface 301 side thereof and is formed using a metal. Note that Ag, Pt, Au, Cu, Al, Cr, Sn, Fe, Ti or the like, an alloy thereof, or the like may be used as the metal forming the color absorbing film.

A method for forming the color absorbing film is not particularly limited, and examples thereof include ion-assisted deposition, ion plating deposition, vacuum vapor deposition, sputtering, and the like.

The color adjusting film is a film that adjusts a color tone through optical interference. In this embodiment, the color adjusting film is composed of a multilayer film including an inorganic film. More specifically, the color adjusting film may be composed of a material including at least one of TazOs, SiO₂, TiO₂, Al₂O₃, ZrOz, NbzOs, HfOz, Na₅Al₃F₁₄, Na₃AlF₆, AlF₃, MgF₂, CaF₂, BaF₂, YF₃, LaF₃, CeF₃, or NdF₃. In this manner, since these inorganic substances have high chemical stability, high stability and durability of the external appearance as a watch component can be achieved.

Note that a method for forming the color adjusting film is not limited, and examples thereof include ion-assisted deposition, ion plating vapor deposition, vacuum deposition, sputtering, and the like. In this manner, the layer configuration of the multilayer film 31 can be freely changed.

### Method for Manufacturing Dial

Next, a method for manufacturing the dial 2 is described.

First, a plurality of the first recesses 32 are formed in the surface 301 of the substrate 30 of the dial 2. For example, the recess 32 is formed through processing such as cutting processing, laser processing, chemical removal processing, polishing processing, and forging or casting processing on the surface 301 of the substrate 30. In this process, the recesses 32 are formed such that the depth D is 55 µm or less, the pitch P is 65 µm or more, or the inclination θ is 70° or less, the pitch P is 65 µm or more, or the inclination θ is 40° or less, and the depth D is 55 µm or less. Thus, a plurality of cone-shaped protrusions are formed at the surface 301.

Next, the multilayer film 31 is stacked at the surface 301 of the substrate 30 of the dial 2. Specifically, the multilayer film 31 is formed by stacking a color absorbing film and a color adjusting film at the surface 301 of the substrate 30 by ion-assisted vapor deposition, ion plating vapor deposition, vacuum vapor deposition, sputtering, or the like. In this manner, the dial 2 can be manufactured.

Further, the watch 1 can be manufactured by using the dial 2 manufactured by the above-described manufacturing method for the watch 1.

### Evaluation Test

Next, in this embodiment, the results of measuring the brightness L* of reflected light obtained by irradiating a test piece with a plurality of recesses formed in a metal substrate and a substrate without the recesses formed, with light will be described in detail.

### Method for Evaluation Test

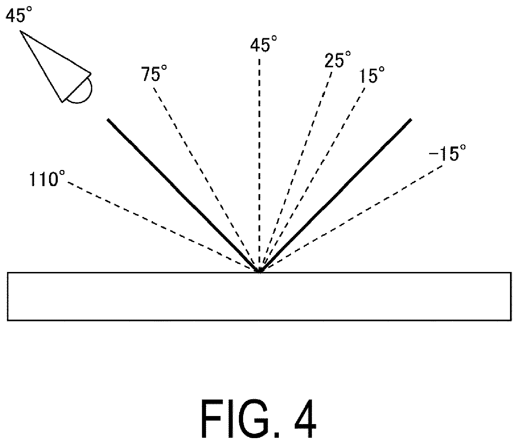

FIG. 4 is a schematic view illustrating a method for measuring an average value of the brightness L*. As illustrated in FIG. 4, under the conditions in Table 1 below, light was emitted onto test pieces S1 to S16 with a substrate in which a plurality of recesses were formed and onto a substrate without the recesses formed, and the average value of the brightness L* of the reflection light was measured. Hereinafter, the substrate without the recesses formed is referred to as a reference plate.

As a specific evaluation test method, the test pieces S1 to S16 and the reference plate are irradiated with light at an angle of 45°. Then, the brightness L* at the position of the viewing angle of -15° to 110° was measured with respect to the position of the regular reflection viewing angle, and the average value of the brightness was obtained. That is, the brightness of the test pieces S1 to S16 and the reference plate as viewed from a wide range of viewing angles was evaluated as the average value of the brightness L*.

Note that in the present disclosure, the brightness L* is a brightness value in a L*a*b* color space defined by CIE (Commission Internationale d'Eclairage; International Commission on Illumination). When the value of L* is "0", it is the brightness of an object that reflects no light (completely absorbs the light). When the value of L* is "100", it is a value of the brightness of white that totally reflects light.

**[Table 1]**

| | Depth D (µm) | Pitch P (µm) | inclination (°) |
|---|---|---|---|
| Test piece S1 | 55 | 95 | 66 |
| Test piece S2 | 55 | 75 | 68 |
| Test piece S3 | 55 | 55 | 71 |
| Test piece S4 | 55 | 35 | 76 |
| Test piece S5 | 40 | 95 | 50 |
| Test piece S6 | 40 | 75 | 58 |
| Test piece S7 | 40 | 55 | 66 |
| Test piece S8 | 40 | 35 | 73 |
| Test piece S9 | 25 | 95 | 39 |
| Test piece S10 | 25 | 75 | 36 |
| Test piece S11 | 25 | 55 | 32 |
| Test piece S12 | 25 | 35 | 67 |
| Test piece S13 | 10 | 95 | 15 |
| Test piece S14 | 10 | 75 | 15 |
| Test piece S15 | 10 | 55 | 37 |
| Test piece S16 | 10 | 35 | 49 |

### Evaluation Test Results

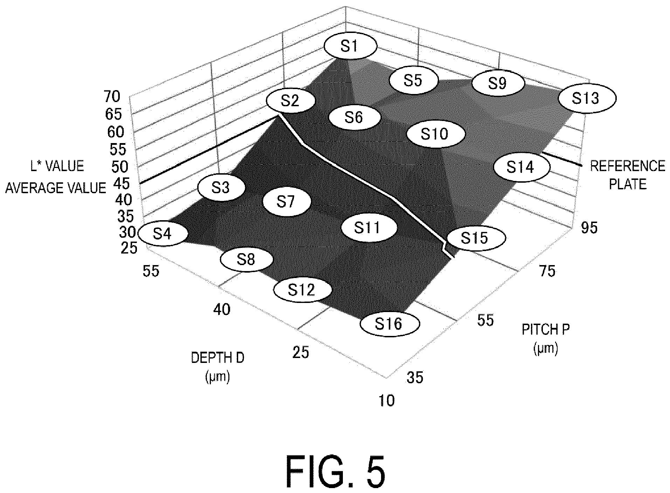

FIG. 5 is a diagram illustrating the relationship among the average value of the brightness L* as the evaluation test result, the depth D, and the pitch P.

As illustrated in FIG. 5, the average value of the brightness L* of the reflected light from the reference plate was irradiated with light was 45. On the other hand, the average value of the brightness L* of the test pieces S1, S2, S5, S6, S9, S10, S13, S14, and S15 exceeded 45 which is the average value of the brightness L* of the substrate.

This is because, with the reference plate, the ratio of the light regularly reflected on the surface is high, and thus the value of the brightness L* at the position of the regular reflection is high, but the value of the brightness L* at other viewing angles is low, and thus the average value of the brightness L* is small. On the other hand, with the test pieces S1, S2, S5, S6, S9, S10, S13, S14, and S15, the average value of the brightness L* is expected to be higher than that with the reference plate, due to the light radiated on the recesses being appropriately scattered by the side surface of the recesses to be dispersed.

This indicates that with the plurality of recesses 32 formed on the substrate such that the depth D is 55 µm or less, the pitch P is 65 µm or more, or the inclination θ is 70° or less, the pitch P is 65 µm or more, or the inclination θ is 40° or less, and the depth D is 55 µm or less, an average value of the brightness L* can be made higher than that obtained with the reference plate. In particular, it was suggested that with the test pieces S9, S10, S13, and S14 in which the depth D was 40 µm or less, the pitch P was 75 µm or more, and the inclination θ was 40° or less, a significantly high average value of the brightness L* of about 70 was obtained.

### Operational Effects of Embodiment

According to this embodiment, the following effects can be achieved.

In this embodiment, the plurality of recesses 32 are formed on the substrate 30 such that the depth D is 55 µm or less, the pitch P is 65 µm or more, or the inclination θ is 70° or less, the pitch P is 65 µm or more, or the inclination θ is 40° or less, and the depth D is 55 µm or less, the incident light is appropriately scattered on the side surface 322 of the recesses 32, whereby the average value of the brightness L* as viewed at a wider range of viewing angles can be made higher than that in a case where the recesses are not formed. Thus, an even larger variety of brightness can be expressed, and the decorative and design properties can be enhanced.

In this embodiment, with the recesses 32 formed such that the depth D is 40 µm or less, the pitch P is 75 µm or more, and the inclination θ of the tangent is 40° or less, the average value of the brightness L* as viewed at a wide range of viewing angles can be significantly higher than that in a case where the recesses are not formed. Thus, an even larger variety of brightness can be expressed, and the decorative and design properties can be enhanced.

In this embodiment, since at least part of the substrate 30 is covered with the multilayer film 31, various color tones can be expressed in addition to brightness, whereby decorative and design properties can be enhanced.

In this embodiment, the multilayer film 31 includes a color adjusting film made of a material including at least one of TazOs, SiO₂, TiO₂, Al₂O₃, ZrOz, NbzOs, HfOz, Na₅Al₃F₁₄, Na₃AlF₆, AlF₃, MgF₂, CaF₂, BaF₂, YF₃, LaF₃, CeF₃, and NdF₃. Accordingly, it is possible to extend the range of color tones that can be expressed by the dial 2. Further, it is possible to improve the appearance stability and durability of the dial 2 because such inorganic substances have high chemical stability.

In this embodiment, the multilayer film 31 includes the color absorbing film formed using a metal. Accordingly, it is possible to obtain a luxurious appearance with the dial 2.

### Second Embodiment

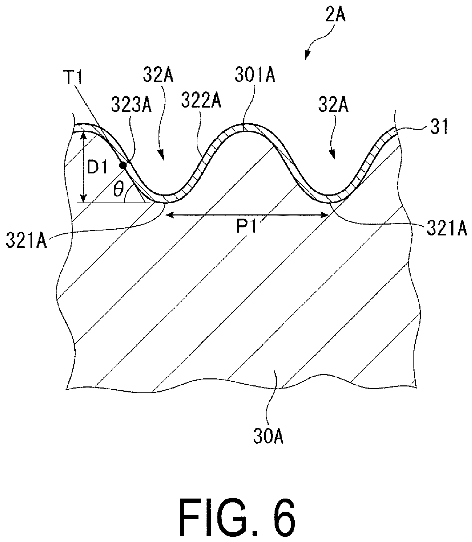

Next, a second embodiment of the present disclosure is described with reference to FIG. 6. The second embodiment differs from the first embodiment described above in that the recesses 32A are defined by the side surface 322A curved.

Note that in the second embodiment, components the same as or similar to those of the first embodiment are denoted with the same reference numerals, and the description will be omitted or simplified.

### Recess

FIG. 6 is a cross-sectional view illustrating a dial 2A main part of a second embodiment. As in the first embodiment described above, in this embodiment, a plurality of recesses 32A are formed at a surface 301A of a substrate 30A. In this embodiment, a side surface 322A and a bottom portion 321A of the recess 32A are curved.

In addition, as in the above-described first embodiment, the recess 32A is formed such that a plurality of cone-shaped protrusions is formed at the surface 301A.

In this embodiment, the depth of each of the recesses 32A along the thickness direction of the substrate 30A is defined as D1, and a length between bottom portions 321A of adjacent ones of the adjacent recesses 32A is defined as a pitch P1, as in the first embodiment described above. Inclination θ of a tangent T1 at a middle point 323A of a side surface 322A of each of the recesses 32A with respect to a direction orthogonal to the thickness direction.

Under this condition, in this embodiment, the recesses 32A are formed such that the depth D1 is 55 µm or less, the pitch P1 is 65 µm or more, or the inclination θ1 is 70° or less, the pitch P1 is 65 µm or more, or the inclination θ1 is 40° or less, and the depth D1 is 55 µm or less, as in the first embodiment described above. More preferably, the recesses 32A are formed such that the depth D1 is 40 µm or less, the pitch P1 is 75 µm or more, and the inclination θ1 is 40° or less.

### Operational Effects of Second Embodiment

According to this embodiment, the following effects can be achieved.

In this embodiment, the side surface 322A and the bottom portion 321A defining the recess 32A are curved. In this manner, since the side defining the recess 32A is not limited to straight lines, greater flexibility in the processing for forming the recess 32A can be achieved.

### Modifications

Note that the present disclosure is not limited to the above-described embodiments, and modification, change, and the like can be performed in so far as the advantages of the present disclosure can be achieved.

In the above-described each embodiment, the recesses 32 and 32A are formed through any one of cutting processing, laser processing, chemical removal processing, polishing processing, or forging or casting processing, but this is not limitative. For example, the recess may be formed through femtolaser processing or picolaser processing. In this manner, the inclination of the side surfaces 322, 322A can be changed with higher accuracy.

In each of the above-described embodiments, the multilayer film 31 is stacked at the surfaces 301, 301A of the substrate 30, 30A so as to cover at least part thereof, but the present disclosure is not limited thereto. For example, the present disclosure includes a configuration where the multilayer film is not stacked at the surface of the substrate.

In the above-described embodiments, the watch component of the present disclosure is configured as the dial 2, but this is not limitative. For example, the watch component of the present disclosure may be configured as one of a case, a dial ring, a glass edge, a movement, a handle, an abbreviation, or an oscillating weight.

### Overview of Present Disclosure

A watch component according to the present disclosure includes a substrate having a surface on which a plurality of recesses are formed, wherein in a cross-sectional view obtained by cutting the substrate in a thickness direction, a depth of the recesses along the thickness direction is 55 µm or less, and a pitch which is a length between bottom portions of adjacent ones of the recesses is 65 µm or more.

In the present disclosure, by forming a plurality of recesses such that the depth is 55 µm or less and the pitch is 65 µm or more, incident light is appropriately scattered on the side surfaces of the recesses. Thus, an average value of the brightness L* a viewed from a wide range of viewing angles larger than that in a case where the recesses are not formed can be obtained. Thus, an even larger variety of brightness can be expressed, and the decorative and design properties can be enhanced.

A watch component according to the present disclosure includes a substrate having a surface on which a plurality of recesses are formed, wherein in a cross-sectional view obtained by cutting the substrate in a thickness direction, a tangent at a center point of a side surface of each of the recesses is inclined by 70° or less with respect to a direction orthogonal to the thickness direction, and a pitch which is a length between bottom portions of adjacent ones of the recesses is 65 µm or more.

In the present disclosure, by forming a plurality of recesses such that the inclination is 70° or less and the pitch is 65 µm or more, incident light is appropriately scattered on the side surfaces of the recesses. Thus, an average value of the brightness L* a viewed from a wide range of viewing angles larger than that in a case where the recesses are not formed can be obtained. Thus, an even larger variety of brightness can be expressed, and the decorative and design properties can be enhanced.

A watch component according to the present disclosure includes a substrate having a surface on which a plurality of recesses are formed, wherein in a cross-sectional view obtained by cutting the substrate in a thickness direction, a tangent at a center point of a side surface of each of the recesses is inclined by 40° or less with respect to a direction orthogonal to the thickness direction, and a depth of the recesses along the thickness direction is 55 µm or less.

In the present disclosure, by forming a plurality of recesses such that the inclination is 40° or less and the depth is 55 µm or less, incident light is appropriately scattered on the side surfaces of the recesses. Thus, an average value of the brightness L* a viewed from a wide range of viewing angles larger than that in a case where the recesses are not formed can be obtained. Thus, an even larger variety of brightness can be expressed, and the decorative and design properties can be enhanced.

In the watch component according to the present disclosure, in the cross-sectional view obtained by cutting the substrate in the thickness direction, the depth of the recesses along the thickness direction may be 40 µm or less, the pitch which is the length between the bottom portions of adjacent ones of the recesses may be 75 µm or more, and the tangent at the center point of the side surface of each of the recesses may be inclined by 40° or less with respect to the direction orthogonal to the thickness direction.

Thus, with the recesses formed such that the depth is 40 µm or less, the pitch is 75 µm or more, and the inclination of the tangent is 40° or less, the average value of the brightness L* as viewed at a wide range of viewing angles can be significantly higher than that in a case where the recesses are not formed. Thus, an even larger variety of brightness can be expressed, and the decorative and design properties can be enhanced.

The watch component according to the present disclosure may further include a multilayer film configured to cover at least part of the substrate.

Thus, since at least part of the substrate is covered with the multilayer film, various color tones can be expressed in addition to brightness, whereby decorative and design properties can be enhanced.

In the watch component of the present disclosure, the multilayer film may include a color adjusting film composed of a material including at least one of Ta₂O₅, SiO₂, TiO₂, Al₂O₃, ZrO₂, Nb₂O₅, HfO₂, Na₅Al₃F₁₄, Na₃AlF₆, AlF₃, MgF₂, CaF₂, BaF₂, YF₃, LaF₃, CeF₃, or NdF₃.

Accordingly, it is possible to extend the range of color tones that can be expressed by the watch component. Further, it is possible to improve the appearance stability and durability of the watch component because such inorganic substances have high chemical stability.

In the watch component of the present disclosure, the multilayer film may include a color absorbing film formed using a metal.

In this manner, a luxurious appearance as a watch component can be achieved.

A watch of the present disclosure includes the watch component described above.

A method for manufacturing a watch component according to the present disclosure is a method for manufacturing a watch component including a substrate, the method including forming a plurality of recesses on a surface of the substrate, wherein in a cross-sectional view obtained by cutting the substrate in a thickness direction, a depth of the recesses along the thickness direction is 55 µm or less, and a pitch which is a length between bottom portions of adjacent ones of the recesses is 65 µm or more.

Thus, by forming a plurality of recesses such that the depth is 55 µm or less and the pitch is 65 µm or more, incident light is appropriately scattered on the side surfaces of the recesses. Thus, an average value of the brightness L* a viewed from a wide range of viewing angles larger than that in a case where the recesses are not formed can be obtained. Thus, an even larger variety of brightness can be expressed, and the decorative and design properties can be enhanced.

A method for manufacturing a watch component according to the present disclosure is a method for manufacturing a watch component including a substrate, the method including forming a plurality of recesses on a surface of the substrate, wherein in a cross-sectional view obtained by cutting the substrate in a thickness direction, a tangent at a center point of a side surface of each of the recesses is inclined by 70° or less with respect to a direction orthogonal to the thickness direction, and a pitch which is a length between bottom portions of adjacent ones of the recesses is 65 µm or more.

Thus, by forming a plurality of recesses such that the inclination is 70° or less and the pitch is 65 µm or more, incident light is appropriately scattered on the side surfaces of the recesses. Thus, an average value of the brightness L* a viewed from a wide range of viewing angles larger than that in a case where the recesses are not formed can be obtained. Thus, an even larger variety of brightness can be expressed, and the decorative and design properties can be enhanced.

A method for manufacturing a watch component according to the present disclosure is a method for manufacturing a watch component including a substrate, the method including forming a plurality of recesses on a surface of the substrate, wherein in a cross-sectional view obtained by cutting the substrate in a thickness direction, a tangent at a center point of a side surface of each of the recesses is inclined by 40° or less with respect to a direction orthogonal to the thickness direction, and a depth of the recesses along the thickness direction is 55 µm or less.

Thus, by forming a plurality of recesses such that the inclination is 40° or less and the depth is 55 µm or less, incident light is appropriately scattered on the side surfaces of the recesses. Thus, an average value of the brightness L* a viewed from a wide range of viewing angles larger than that in a case where the recesses are not formed can be obtained. Thus, an even larger variety of brightness can be expressed, and the decorative and design properties can be enhanced.

## Claims

1. A watch component, comprising a substrate having a surface on which a plurality of recesses are formed, wherein
in a cross-sectional view obtained by cutting the substrate in a thickness direction, a depth of the recesses along the thickness direction is 55 µm or less, and
a pitch which is a length between bottom portions of adjacent ones of the recesses is 65 µm or more.

2. A watch component, comprising a substrate having a surface on which a plurality of recesses are formed, wherein
in a cross-sectional view obtained by cutting the substrate in a thickness direction, a tangent at a center point of a side surface of the recesses is inclined by 70° or less with respect to a direction orthogonal to the thickness direction, and
a pitch which is a length between bottom portions of adjacent ones of the recesses is 65 µm or more.

3. A watch component, comprising a substrate having a surface on which a plurality of recesses are formed, wherein
in a cross-sectional view obtained by cutting the substrate in a thickness direction, a tangent at a center point of a side surface of the recesses is inclined by 40° or less with respect to a direction orthogonal to the thickness direction, and
a depth of the recesses along the thickness direction is 55 µm or less.

4. The watch component according to claim 1, wherein
in the cross-sectional view obtained by cutting the substrate in the thickness direction, the depth of the recesses along the thickness direction is 40 µm or less,
the pitch which is the length between the bottom portions of adjacent ones of the recesses is 75 µm or more, and
the tangent at the center point of the side surface of the recesses is inclined by 40° or less with respect to the direction orthogonal to the thickness direction.

5. The watch component according to claim 1 comprising a multilayer film configured to cover at least part of the substrate.

6. The watch component according to claim 5, wherein
the multilayer film includes a color adjusting film composed of a material including at least one of Ta₂O₅, SiO₂, TiO₂, Al₂O₃, ZrO₂, Nb₂O₅, HfO₂, Na₅Al₃F₁₄, Na₃AlF₆, AlF₃, MgF₂, CaF₂, BaF₂, YF₃, LaF₃, CeF₃, or NdF₃.

7. The watch component according to claim 5, wherein the multilayer film includes a color absorbing film formed using a metal.

8. A watch comprising the watch component according to claim 1.

9. A method for manufacturing a watch component including a substrate, the method comprising forming a plurality of recesses on a surface of the substrate, wherein
in a cross-sectional view obtained by cutting the substrate in a thickness direction, a depth of the recesses along the thickness direction is 55 µm or less, and
a pitch which is a length between bottom portions of adjacent ones of the recesses is 65 µm or more.

10. A method for manufacturing a watch component including a substrate, the method comprising forming a plurality of recesses on a surface of the substrate, wherein
in a cross-sectional view obtained by cutting the substrate in a thickness direction, a tangent at a center point of a side surface of the recesses is inclined by 70° or less with respect to a direction orthogonal to the thickness direction, and
a pitch which is a length between bottom portions of adjacent ones of the recesses is 65 µm or more.

11. A method for manufacturing a watch component including a substrate, the method comprising forming a plurality of recesses on a surface of the substrate, wherein
in a cross-sectional view obtained by cutting the substrate in a thickness direction, a tangent at a center point of a side surface of the recesses is inclined by 40° or less with respect to a direction orthogonal to the thickness direction, and
a depth of the recesses along the thickness direction is 55 µm or less.
